# FASCICULE DE BREVET EUROPEEN

(11) **EP 2 886 701 B1**
(45) Date de publication et mention de la délivrance du brevet: **08.09.2021**
(21) Numéro de dépôt: 14199412.9
(22) Date de dépôt: 19.12.2014
(51) Int. Cl.: D06F 39/00, A47L 15/42, A47L 15/46, D06F 39/08, D06F 33/00

(54) **Système de chauffe-eau et d'équipement consommateur d'eau chaude**
System zur Wassererwärmung und -versorgung der Verbraucher
System of boiler and equipment consuming hot water

(30) Priorité: 20.12.2013 FR 1363237
(43) Date de publication de la demande: 24.06.2015
(73) Titulaire: Electricité de France, 75008 Paris (FR)
(72) Inventeur: Coince, Anne-Sophie, 77210 AVON (FR); Malisani, Paul, 75012 PARIS (FR)
(74) Mandataire: Regimbeau

(56) Documents cités:
- EP-A1- 2 031 120
- WO-A1-2006/096075
- WO-A1-2007/060059
- US-A- 4 765 351
- US-A1- 2005 127 194
- US-A1- 2011 153 105
- US-B1- 6 499 321
- None

## Description

### DOMAINE TECHNIQUE GENERAL

La présente invention concerne un système comprenant un chauffe-eau à accumulation et un équipement domestique consommateur d'eau chaude à capacité énergétique modulable.

### ETAT DE L'ART

Le « mix énergétique » désigne la répartition des différentes sources consommées pour la production d'énergie électrique. Ce mix énergétique, en constante évolution, voit la progression constante des Energies Renouvelables, ce qui entraîne un besoin accru en flexibilités du système.

Ces dernières, représentées essentiellement par l'éolien et le photovoltaïque, ne permettent en effet pas une production constante et régulée au contraire d'une centrale nucléaire, d'où des problèmes de variabilité et de prévisibilité de la production associée. Cela fait que les aléas de très court terme vont fortement augmenter.

D'autre part, des problèmes locaux de qualité de fourniture électrique vont être amplifiés du fait d'une répartition géographique inhomogène des installations, avec par exemple plutôt du photovoltaïque dans le Sud et de l'éolien dans le Nord.

Il apparait essentiel de trouver des solutions de pilotage de la charge associée en vue de maitriser l'aléa lié aux Energies Renouvelables intermittentes.

Il a par exemple été proposé la charge de batteries stationnaires pour faciliter l'insertion massive de panneaux photovoltaïques (démonstrateur « NiceGrid »). Toutefois, les coûts d'investissement élevés ne permettent pas d'envisager un déploiement à grande échelle de cette solution alternative à court terme. Il est également prévu d'agir sur la puissance réactive fournie par les panneaux photovoltaïques pour ajuster la tension. Cependant, cette dernière piste ne répond pas aux enjeux de maîtrise de l'aléa éolien.

Alternativement au stockage via des batteries, il est possible de stocker l'énergie thermiquement. Avec près de 12 millions d'unités installées en France dont plus de 80% sont asservies au signal tarifaire Heures Pleines/Heures creuses (HP/HC), le parc de Chauffe-Eau Joule (CEJ) à accumulation résidentiel - utilisé aujourd'hui pour le lissage journalier de la courbe de charge - est susceptible de répondre à ces nouveaux enjeux.

La demande de brevet US 2009/0188486 propose à ce titre des chauffe-eau alimentés en courant continu par des modules photovoltaïques. Le système est configuré pour maximiser la fraction solaire, c'est-à-dire minimiser la consommation d'électricité soutirée du réseau tout en maintenant le confort pour l'utilisateur.

Ce système apporte satisfaction, mais ne résout que partiellement le problème : il peut tout à fait y avoir un jour avec un excédent d'énergie électrique issu des panneaux photovoltaïques, et le jour suivant avec un temps couvert rendant nécessaire la consommation d'une autre source d'électricité. De plus le système est complexe et n'est utilisable que dans des habitations équipées de panneaux solaires.

Le document US 2011/153105 A1 divulgue un système formé d'un chauffe-eau et d'un équipement domestique distinct dudit dudit chauffe-eau.

Il serait souhaitable de disposer d'une manière d'utiliser la capacité de stockage des chauffe-eau (joule ou thermodynamiques) qui permette plus efficacement de réguler l'énergie électrique d'origine renouvelable (locale ou décentralisée) qui soit plus efficace, plus intelligente, et adaptable à n'importe quel chauffe-eau existant sans modifications lourdes, et sans couplage direct.

### PRESENTATION DE L'INVENTION

L'invention propose de pallier ces inconvénients en proposant selon un premier aspect un système comprenant :
- un chauffe-eau comprenant un réservoir d'eau et
- un dispositif de chauffage de l'eau du réservoir, le dispositif comprenant un premier moyen de chauffage alimenté par un réseau électrique ;
- un équipement domestique consommateur d'eau chaude, distinct dudit chauffe-eau, l'équipement pouvant être alimenté à la fois en eau froide et/ou
   en eau chaude, et comprenant un deuxième moyen de chauffage alimenté par le réseau électrique ;
   le système étant caractérisé en ce qu'il comprend en outre un élément de contrôle configuré pour autoriser ou non l'alimentation de l'équipement en eau chaude depuis le réservoir en fonction d'au moins des données descriptives d'un état dudit réseau électrique.

Le dispositif selon l'invention est avantageusement complété par les caractéristiques suivantes, prises seules ou en une quelconque de leur combinaison techniquement possible :
- le système comprend en outre un boitier recevant lesdites données descriptives d'un état du réseau électrique depuis un réseau de communication, le boitier étant connecté à l'élément de contrôle ;
- le système comprend au moins une sonde, la sonde étant soit une sonde de température configurée pour émettre un signal représentatif de la température de l'eau du réservoir, soit une sonde de comptage configurée pour émettre un signal représentatif de la quantité d'énergie thermique ou de la variation de la quantité d'énergie dans le réservoir, l'alimentation en eau chaude de l'équipement n'étant en outre autorisée par l'élément de contrôle que lorsque ledit signal est représentatif d'une température supérieure à un seuil prédéfini ou d'une quantité d'énergie thermique supérieure à un seuil prédéfini ;
- le système comprend un module de contrôle dudit dispositif de chauffage contrôlé en fonction dudit signal émis par la sonde, et un élément de leurre disposé entre la sonde et le module de contrôle configuré pour modifier le signal émis par la sonde de sorte à modifier une capacité énergétique du réservoir d'eau, en fonction des données descriptives d'un état dudit réseau électrique ;

- l'équipement présente un fonctionnement par cycles, un cycle étant associé à une consommation d'au moins une quantité prédéterminée d'eau chaude ;
- l'alimentation en eau chaude de l'équipement est autorisée par l'élément de contrôle lorsque :
   - les données descriptives d'un état dudit réseau électrique sont caractéristiques d'une surabondance actuelle et/ou d'un déficit futur d'énergie d'origine renouvelable au sein dudit réseau électrique, et
   - la quantité d'eau chaude dans le réservoir est supérieure à la somme d'une quantité minimale de référence et de ladite quantité prédéterminée associée à un cycle et/ou la capacité énergétique maximale du réservoir est atteinte ;
- ladite quantité minimale de référence est calculée par l'élément de contrôle en fonction d'usages moyens renseignés par un utilisateur ou déterminés par auto-apprentissage ;
- le réservoir est sensiblement surdimensionné par rapport à ladite quantité minimale de référence, l'élément de contrôle étant en outre configuré pour ne pas autoriser l'alimentation du dispositif de chauffage lorsque les données descriptives d'un état dudit réseau électrique sont caractéristiques d'un déficit actuel et/ou d'une surabondance future d'énergie d'origine renouvelable au sein dudit réseau électrique, si la quantité d'eau chaude disponible dans le réservoir est supérieure à ladite quantité minimale de référence ;
- l'utilisateur peut choisir que l'alimentation en eau chaude de l'équipement est également autorisée par l'élément de contrôle dès lors que la quantité d'eau chaude dans le réservoir est supérieure à la somme d'une quantité minimale de référence et de ladite quantité prédéterminée associée à un cycle ;
- l'élément de contrôle est également configuré pour déclencher une mise en marche de l'équipement si :
   - l'alimentation en eau chaude est autorisée par l'élément de contrôle, et
   - l'équipement est dans un état d'attente ;
- l'élément de contrôle est également configuré pour ne déclencher une mise en marche de l'équipement que si l'écart entre une puissance appelée et une puissance souscrite est supérieur à un seuil prédéterminé ;
- l'élément de contrôle est également configuré pour ne déclencher une mise en marche de l'équipement que dans une ou plusieurs plages temporelles renseignées par un utilisateur ;
- l'élément de contrôle est également configuré pour déclencher une mise en marche de l'équipement même si l'alimentation en eau chaude n'est pas autorisée, si :
   - l'équipement est dans un état d'attente, et
   - le temps restant avant la fin de la prochaine plage temporelle est inférieur à la durée d'un cycle de l'équipement ;
- l'élément de contrôle est adapté pour contrôler au moins un actionneur d'une vanne disposée sur une branche d'eau chaude et/ou une branche d'eau froide, pour l'alimentation en eau chaude de l'équipement ;
- l'équipement est un lave-linge ou un lave-vaisselle.

Selon un deuxième aspect, l'invention concerne un élément de contrôle adapté pour un système comprenant :
- un chauffe-eau comprenant un réservoir d'eau ;
- un dispositif de chauffage de l'eau du réservoir, le dispositif comprenant un premier moyen de chauffage alimenté par un réseau électrique ;
- un équipement domestique consommateur d'eau chaude, distinct dudit chauffe-eau, l'équipement pouvant être alimenté à la fois en eau froide et/ou
   en eau chaude, et comprenant un deuxième moyen de chauffage alimenté par le réseau électrique ;
   l'élément de contrôle étant caractérisé en ce qu'il est configuré pour autoriser ou non l'alimentation de l'équipement en eau chaude depuis le réservoir en fonction d'au moins des données descriptives d'un état dudit réseau électrique.

Selon un troisième aspect, l'invention concerne un procédé d'utilisation d'un équipement consommateur d'eau chaude, le procédé étant caractérisé en ce qu'il comprend des étapes de :
- réception de données descriptives d'un état d'un réseau électrique ;
- traitement desdites données descriptives d'un état d'un réseau électrique par un élément de contrôle de sorte à autoriser l'alimentation de l'équipement en eau chaude issue d'un réservoir d'eau chaude d'un chauffe-eau distinct dudit équipement et/ou en eau froide ;
- si l'alimentation en eau chaude n'est pas autorisée, chauffage de l'eau froide par un moyen de chauffage de l'équipement ;
- mise en marche de l'équipement.

Selon des caractéristiques avantageuses :
- l'étape de mise en marche de l'équipement est déclenchée par l'élément de contrôle, lorsque l'alimentation en eau chaude est autorisée par l'élément de contrôle, et l'équipement est dans un état d'attente. PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1 est un schéma d'un premier mode de réalisation du système selon l'invention ;
- la figure 2 est un schéma d'un second mode de réalisation du système selon l'invention ;
- la figure 3 est un schéma d'un troisième mode de réalisation du système selon l'invention.

Sur les différentes figures, les éléments similaires portent les mêmes références numériques.

### DESCRIPTION DETAILLEE

### Architecture générale

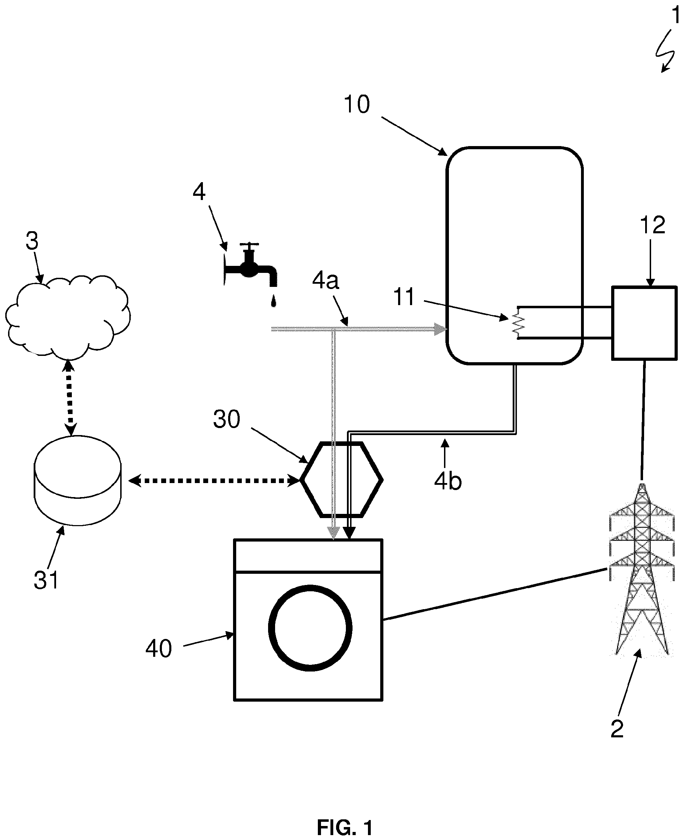

La **figure 1** représente l'architecture générale d'un mode de réalisation du système 1 selon l'invention. Ce système est typiquement la combinaison de deux dispositifs domestiques bien connus : un dispositif producteur d'eau chaude tel qu'un chauffe-eau, en particulier un Chauffe-Eau Joule à accumulation (CEJ, 44% des habitats en sont équipés), et un (ou plusieurs) équipement consommateur d'eau chaude tel qu'un lave-vaisselle ou lave-linge (il y en a près de 42 millions en France). On comprendra que l'invention n'est limitée à aucun d'entre eux.

Le système 1 comprend ainsi :
- un réservoir d'eau 10 (communément appelé « ballon » d'eau chaude);
- un dispositif de chauffage 11 de l'eau du réservoir 10, le dispositif 11 comprenant un premier moyen de chauffage alimenté par un réseau électrique 2 ;
- un équipement domestique 40 consommateur d'eau chaude, l'équipement 40 pouvant être alimenté à la fois en eau froide et/ou en eau chaude, et comprenant un deuxième moyen de chauffage alimenté par le réseau électrique 2 ;

On comprendra que le réservoir d'eau 10 et le dispositif de chauffage 11 sont ceux d'un chauffe-eau. Ainsi, la partie chauffe-eau et la partie équipement domestique sont distinctes. En d'autres termes, le réservoir 10 (et tout éventuel autre composant de la partie chauffe-eau) ne fait pas partie de l'équipement 40. Ce dernier peut éventuellement comprendre son propre réservoir, mais le présent réservoir 10 est extérieur à l'équipement 40.

On verra plus loin que le chauffe-eau peut également comprendre d'autres éléments tels qu'un module de contrôle 12, une sonde 20, et/ou un élément de leurre 21, etc. La partie chauffe-eau est autonome et apte à fournir de l'eau chaude.

Le premier moyen de chauffage électrique du dispositif de chauffage 11 est généralement une résistance, d'où le chauffage de l'eau par effet Joule, et la dénomination CEJ du chauffe-eau. Cependant le chauffe-eau selon l'invention n'est pas limité au chauffe-eau Joule et peut être un chauffe-eau thermodynamique. Alternativement, il peut s'agir par exemple d'une pompe à chaleur complète dont la source chaude est en échange thermique avec l'eau du réservoir 10 (et la source froide en échange thermique par exemple avec l'air extérieur), de sorte à permettre un chauffage de l'eau avec une efficacité supérieure à 100%.

De façon préférée, le dispositif 11 est intégralement électrique (il ne comprend ainsi que des moyens de chauffage alimentés par le réseau 2, et pas de bruleurs à gaz par exemple). L'énergie de chauffage fournie à l'eau est alors entièrement d'origine électrique. Le système n'est toutefois pas limité à cette configuration et le dispositif 11 peut alternativement comprendre en outre un moyen de chauffage alternatif (non-électrique) tel qu'un bruleur, un échangeur avec un collecteur solaire, etc.

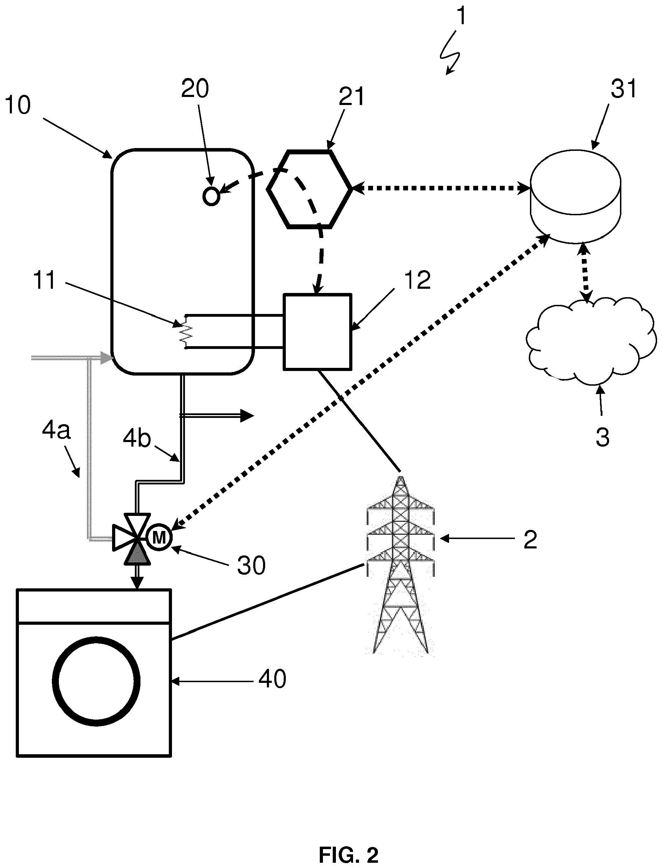

La partie chauffe-eau est généralement régulée en température. Pour cela le système (et en particulier le chauffe-eau) peut comme évoqué comprendre une ou plusieurs sondes 20 (soit classiquement des sondes de température capables d'envoyer un signal représentatif de la température de l'eau du réservoir 10, soit des sondes de comptage d'une quantité d'énergie, telles qu'un tore d'intensité, un intégrateur, un observateur, etc., capables d'envoyer un signal représentatif de la quantité d'énergie thermique dans le réservoir 10, ou plus particulièrement de la variation de la quantité d'énergie thermique dans le réservoir 10, laquelle est facile à obtenir en mesurant la puissance fournie au réservoir 10, mais on comprendra qu'il est alternativement possible de mesurer à la fois la température et le volume d'eau chaude sortant ou d'eau froide arrivant via un débitmètre pour obtenir cette variation d'énergie thermique. On obtient la quantité d'énergie par intégration des variations) et un module de contrôle 12 du dispositif de chauffage 11. Ces éléments seront décrits plus en détail plus loin, en particulier en référence à un mode de réalisation préféré représenté par la **figure 2**. Typiquement, la ou les sondes 20 envoient en permanence ou par intermittence un signal représentatif de la température de l'eau du réservoir 10, ou un signal représentatif de la quantité/variation de la quantité d'énergie thermique dans le réservoir 10 (pour une sonde de comptage d'énergie). Ce signal peut être un envoi de données représentant numériquement la température/quantité/variation de la quantité d'énergie thermique, ou comme on verra plus loin un signal électrique dont un paramètre est fonction de la température/quantité d'énergie thermique.

Le module de contrôle 12 est typiquement une carte électronique qui déclenche ou non le chauffage en fonction de la température de l'eau et de nombreux autres paramètres éventuels (programmation, saison, plages horaires, heures creuses/heures pleines, usages habituels de l'utilisateur, etc.).

L'équipement 40 est comme expliqué un lave-vaisselle ou un lave-linge (d'autres équipements consommateurs d'eau chaude comme par exemple une centrale à vapeur sont possibles), typiquement complètement électrique. Le deuxième moyen de chauffage électrique du dispositif de chauffage est généralement lui aussi une résistance. Il permet de chauffer l'eau alimentant l'équipement 40 lorsqu'elle est froide.

L'équipement 40 est particulier en ce qu'il est capable d'être alimenté directement en eau chaude, en particulier provenant du réservoir 10. Lorsque l'équipement 40 est alimenté en eau chaude, le recours au deuxième moyen de chauffage est limité voire rendu non nécessaire si l'eau est suffisamment chaude. Même si la majorité des équipements de type lave-vaisselle/lave-linge fonctionnent exclusivement à l'eau froide, de tels équipements possédant une entrée d'eau froide et une entrée d'eau chaude, ou une entrée pouvant être raccordée aussi bien à l'eau chaude qu'à l'eau froide, sont bien connus. On citera par exemple la demande de brevet EP2292133 qui décrit entre autres un tel lave-linge. L'équipement 40 est ici autonome. Il comprend par exemple une carte électronique capable de gérer l'alimentation en eau, l'activation du deuxième moyen de chauffage, et les autres fonctions de l'équipement 40 (par exemple la mise en rotation du tambour pour un lave-linge).

Comme on le verra plus loin, l'équipement 40 présente avantageusement un fonctionnement par cycle. Par cycle on entendra une succession prédéterminée et automatisée de phases de fonctionnement (telles que remplissage, lavage, vidange et essorage pour un lave-linge) associée à une consommation d'au moins une quantité prédéterminée d'eau chaude (i.e. une consommation d'une quantité prédéterminée d'eau et d'une quantité prédéterminée d'énergie pour chauffer l'eau et/ou mettre en œuvre les autres fonctions de l'équipement), pendant au moins un temps prédéterminé.

Le réseau électrique 2 est un réseau à grande échelle qui relie une pluralité de sources électriques. Comme expliqué précédemment, il s'agit à la fois d'énergie d'origine non-renouvelable (nucléaire et/ou fossile) et d'énergie d'origine renouvelable (solaire, éolien, etc.). L'énergie d'origine renouvelable présente des problèmes de variabilité et de prévisibilité, alors que l'énergie d'origine non-renouvelable est d'une meilleure disponibilité. Par réseau, on entendra, outre la « grille », les équipements de transport, les équipements de production (centrales), etc. Le terme « réseau » doit être interprété au sens large.

Dans l'hypothèse où l'utilisateur du système 1 comprend une source personnelle d'énergie renouvelable (par exemple des panneaux photovoltaïques de toit) on comprend que le réseau 2 englobe à la fois le réseau électrique global et le réseau électrique local de l'utilisateur (en d'autres termes que les centrales distantes et les panneaux solaires locaux peuvent aussi bien l'un que l'autre alimenter le dispositif de chauffage 11).

Outre le réseau électrique 2, un réseau d'eau 4 permet l'alimentation en eau du logement dans lequel le système 1 est disposé. Il comprend une branche d'eau froide 4a alimentant au moins le réservoir 10 et l'équipement 40 (de façon permanente ou lorsque l'alimentation en eau chaude n'est pas autorisée), ainsi qu'une branche d'eau chaude 4b issue du réservoir 10 et alimentant l'équipement 40 ainsi que par exemple les robinets et douches du logement.

### Elément de contrôle

Le système 1 se distingue en ce qu'il comprend en outre un élément de contrôle 30 configuré pour autoriser ou non l'alimentation de l'équipement 40 en eau chaude depuis le réservoir 10 en fonction de données descriptives d'un état dudit réseau électrique 2.

En d'autres termes, l'élément de contrôle 30 détermine le ratio eau chaude/eau froide avec lequel l'équipement 40 est alimenté et pilote une vanne de mélange motorisée, soit ouvre ou non une vanne tout ou rien ce qui peut alors nécessiter d'ajouter une vanne de mélange en sortie du réservoir 10 pour délivrer l'eau chaude à une température maximale compatible avec les équipements (par exemple 60°C) et éviter les risques de brûlure si tous les points de soutirage ne sont pas équipés de mitigeurs. En pratique des vannes sur les branches 4a et/ou 4b (soit une vanne deux voies sur la branche d'eau chaude 4b, soit une vanne trois voies sur les deux branches 4a, 4b) permet ou non l'alimentation en eau chaude de l'équipement, et l'élément de contrôle 30 envoie des signaux permettant d'opérer ces vannes (via des actionneurs). Par défaut, l'utilisateur peut conserver la faculté de gérer manuellement l'alimentation. On comprendra que la ou les vannes nécessaires peuvent être internes à l'équipement 40.

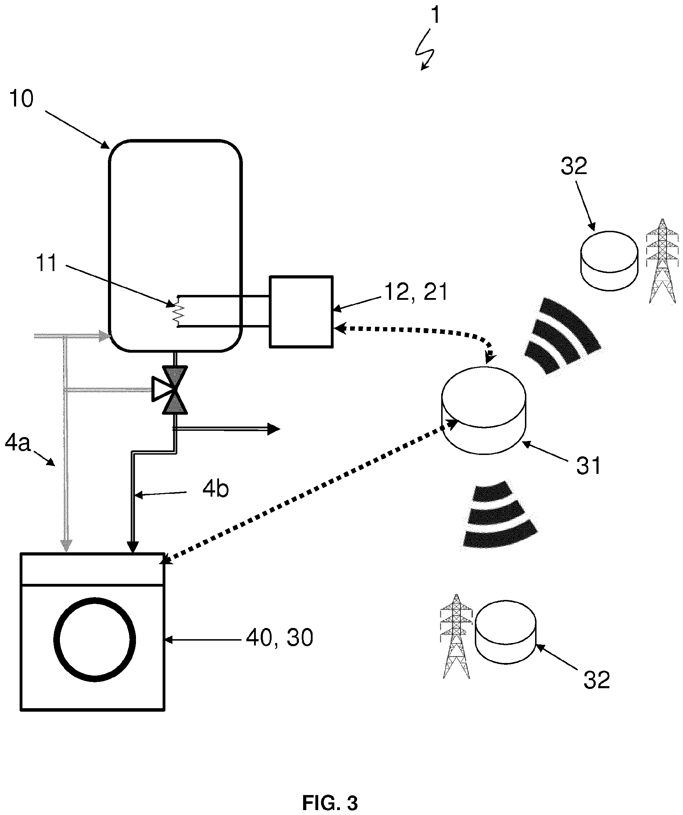

La figure 2 représente une vanne de mélange en entrée de l'équipement 40 (qui dispose alors d'une entrée commune d'eau provenant du réservoir 10 et du réseau d'eau 4).La figure 3 représente le cas d'une vanne de mélange « globale » en sortie du réservoir 10 pour délivrer l'eau chaude à une température maximale compatible avec les équipements 40 car, comme on le verra plus loin, c'est au sein de l'équipement 40 que les fonctionnalités de l'élément 30 sont mises en œuvre dans ce mode de réalisation.

L'équipement 40 devient ainsi un prolongement du réservoir 10 dont il fait virtuellement varier la capacité : lorsque l'alimentation en eau chaude est acceptée, l'équipement 40 vient soutirer un volume donné d'eau chaude au réservoir 10, et donc une quantité d'énergie potentielle : le réservoir 10 permet de stocker l'électricité sous forme de capacité calorifique de l'eau (4185 *J*. *kg*⁻¹.*K*⁻¹).

L'élément de contrôle 30 permet ainsi d'utiliser les chauffe-eau installés pour gérer la production électrique d'origine renouvelable, et ce facilement et efficacement : l'alimentation ou non en eau chaude des équipements 40 permet en effet d'augmenter ou de diminuer sur commande la consommation de ces chauffe-eau et de jouer sur l'énergie stockée en tant qu'eau chaude. La capacité énergétique devient modulable. Plusieurs TWh sont ainsi disponibles à l'échelle du territoire français par exemple.

Ceci permet par exemple de privilégier la consommation électrique tant que l'énergie d'origine renouvelable est largement disponible, et de limiter la consommation électrique ou se rabattre sur d'autres énergies (par exemple via des moyens de chauffage alternatifs tels des bruleurs si le dispositif 11 en comprend) sinon. La consommation énergétique est transférée du deuxième moyen de chauffage (celui de l'équipement 40) au premier moyen de chauffage (celui du réservoir 10), ce qui a pour effet de décaler dans le temps la consommation électrique. En effet, le moment de l'usage réel de l'eau chaude (cycle de l'équipement 40) ne correspond plus au moment de production de l'eau chaude (le chauffe-eau peut avoir fonctionné plusieurs heures avant, alors que l'énergie était en abondance et moins chère).

De plus, l'élément de contrôle 30 s'intègre sans difficulté dans un système 1 existant et n'entraine pas de modification structurelle majeure. En particulier, l'équipement 40 peut être très légèrement modifié (soit en intégrant les actionneurs de vanne à l'équipement, soit par un contrôle logiciel de l'alimentation en eau), voire laissé complètement inchangé : l'équipement 40 peut être capable de détecter une absence de pression sur la branche d'eau chaude 4b et afficher un défaut. Dans ce cas plutôt que de couper l'arrivée de l'eau chaude, il conviendra de basculer l'alimentation d'eau chaude sur la branche d'eau froide 4a au moyen d'une vanne d'inversion. La plupart des modèles peuvent se contenter de recevoir de l'eau chaude à une température quelconque, puis de s'adapter automatiquement en fournissant l'énergie manquante (le cas échéant) à l'eau via le deuxième moyen de chauffage ou en mélangeant l'eau trop chaude avec de l'eau froide.

Il est ainsi facile et peu coûteux de modifier les architectures existantes. Dans le cas d'équipements 40 neufs, l'élément de contrôle 30 ou l'actionneur peut être directement intégré à une carte électronique (puisque l'équipement 40 possède le plus souvent ses propres vannes) comme une fonction supplémentaire afin d'éliminer la nécessité de boitier supplémentaire.

Il est à noter que dans le cas d'une connexion entre l'élément de contrôle 30 et une carte électronique de l'équipement 40, cette connexion peut être bidirectionnelle, afin d'indiquer à l'élément de contrôle 30 l'existence, voire le type de cycle préprogrammé, pour optimiser la prise de décision, notamment lorsqu'il y a plusieurs équipements 40 consommateurs d'eau chaude dans l'habitat.

Le pilotage de l'élément de contrôle 30 est réalisé en fonction de données descriptives d'un état dudit réseau électrique 2. Ces données désignent de façon générale toutes les informations sur la charge du réseau 2, le taux d'énergie d'origine renouvelable, les prévisions de variation de ce taux, de la production/consommation en général (y compris au niveau de centrales), les signaux tarifaires, etc.

Ces données peuvent être des données génériques obtenues localement, par exemple d'origine météorologique, qui peuvent indiquer dans quelle mesure les moyens de production d'énergie renouvelable vont être productifs, mais de façon préférée il s'agit de données plus complexes fournies depuis un réseau de communication 3 (typiquement le réseau internet) via un boitier 31, en particulier en temps réel.

Dans un premier mode de réalisation, le boitier 31 est un compteur électrique communicant (par exemple LINKY) disposant d'un émetteur Télé-Information Client (TIC) intégré ou non. Les données utilisées peuvent notamment être les champs de la TIC tels que par exemple : l'état binaire d'un ou plusieurs contact(s) sec ou virtuel(s), l'index tarifaire de la grille fournisseur et/ou distributeur en cours/à venir, le prix de l'électricité, le préavis de pointe mobile et/ou une ou plusieurs pointe(s) mobile(s), la tension, etc.

Dans un deuxième mode de réalisation, le boitier 31 est un équipement d'accès à internet de type « box » d'un fournisseur d'accès à Internet. Le boitier 31 est connecté à l'élément de contrôlé 30 par des moyens de connexion réseau tels que le Wi-Fi, une liaison Ethernet, le CPL, etc. ; les données peuvent être alors des données météorologiques complètes (vitesse du vent, ensoleillement, etc.), des données pré-traitées sur des serveurs d'un fournisseur d'électricité pour optimiser la charge globale, etc.

Dans un troisième mode de réalisation (qui sera décrit plus en détail plus loin et qui est représenté par la **figure 3**), le boitier 31 est un gestionnaire d'énergie connecté via une liaison filaire/radio à un ou plusieurs compteurs électriques 32 associés à des points de production d'énergie d'origine renouvelable (en particulier si l'énergie d'origine renouvelable a un ou plusieurs points de livraison locaux dédiés). La liaison peut être mono ou bidirectionnelle. L'accès à des compteurs 32 permet un suivi en temps réel complet de la production d'énergie d'origine photovoltaïque et de la consommation du ou des logements.

La présente invention n'est ni limitée à un type de données descriptives d'un état dudit réseau électrique 2, ni à une manière de fournir ces données.

### Premier mode de fonctionnement

Le principe est d'autoriser l'alimentation en eau chaude de l'équipement 40 par l'élément de contrôle 30 lorsque :
- les données descriptives d'un état dudit réseau électrique 2 sont caractéristiques d'une surabondance actuelle et/ou d'un déficit futur d'énergie d'origine renouvelable au sein dudit réseau électrique 2, et
- la quantité d'eau chaude ou d'énergie thermique dans le réservoir 10 est supérieure à la somme d'une quantité minimale de référence et de ladite quantité prédéterminée associée à un cycle et/ou la capacité énergétique maximale du réservoir 10 est atteinte.

La quantité minimale de référence est une quantité fonction des usages d'eau moyens du foyer, et donc une quantité d'eau de « réserve ». Il est en effet souhaitable de ne pas risquer une pénurie d'eau chaude pour les occupants du logement et donc de ne pas autoriser l'alimentation en eau chaude si cela pouvait vider le chauffe-eau. Cette quantité, qui dépend du temps, peut-être déterminée par auto-apprentissage ou programmée par les occupants en fonction de leurs habitudes de consommation. La quantité d'énergie thermique est, comme expliquée précédemment, exprimée en kilowattheures et prend en compte à la fois la quantité d'eau et sa température.

Il est en effet à noter que les « quantités d'eau » susmentionnées sont préférentiellement définies en termes de quantités d'énergie. Par exemple, si la température de consigne du réservoir 10 est élevée, cette quantité se traduira par un volume d'eau soutirée moins élevé car la « densité énergétique » de l'eau est supérieure (et l'eau très chaude sera mélangée dans l'équipement 40 avec de l'eau froide pour obtenir l'eau à température souhaitée, par exemple pour un cycle de lavage à 40°C).

Par capacité énergétique du réservoir 10, on entend la quantité maximale d'énergie stockable sous forme thermique via l'eau chaude.

A ce titre, l'élément de contrôle 30 est avantageusement paramétrable, par exemple via un PC, un smartphone ou une tablette connecté au réseau de communication 3, ou directement via une interface sur l'élément 30 (un ou plusieurs boutons). Cela permet à l'utilisateur de renseigner ses usages moyens (nombre de bains/douches par jour), la capacité de son réservoir 10 (typiquement 75l, 100l, 150l, 200l, 250l, 350l, etc.) et la température de consigne de l'eau chaude (typiquement 55°C, 60°C, 65°C, etc.). A partir de ces données, l'élément de contrôle 30 calcule ladite quantité minimale de référence, et éventuellement scénarise les usages du foyer sur une journée type (quantité d'eau chaude stockée dans le réservoir 10 en fonction du temps). L'élément de contrôle 30 peut être connecté directement à la partie chauffe-eau (en particulier le module de contrôle 12) pour disposer en permanence des paramètres réels du réservoir et non d'une estimation. Il peut aussi être un gestionnaire d'énergie « connecté » à la TIC, pilotant les actionneurs (vannes et/ou contacts secs en façade des équipements) et régulant le fonctionnement du chauffe-eau (température de consigne, autorisation de fonctionnement) en exploitant ou non des informations sur le(s) cycle(s) en attente, l'état du ballon et/ou la quantité d'énergie stockée lors des relances dynamiques.

Si l'eau disponible dans le réservoir 10 est ainsi suffisante, la consommation d'eau chaude est autorisée pour les équipements 40. L'effet principal de l'alimentation en eau chaude n'est pas tant l'augmentation du stockage d'énergie (cette augmentation n'a lieu que si la capacité maximale du chauffe-eau est déjà atteinte), mais surtout un lissage de la consommation, et un meilleur contrôle macroscopique de celle-ci. En effet, cela permet d'effacer le pic de consommation lié au chauffage instantané de l'eau dans l'équipement 40 ayant lieu le plus souvent à la pointe. D'où l'intérêt de favoriser l'alimentation en eau chaude des équipements 40 même en absence de contraintes du système électrique, dès que la quantité d'eau chaude accumulée est supérieure aux besoins d'eau chaude sanitaire programmés/prévisionnels des occupants.

### Elément de leurre

De façon générale un chauffe-eau comprend le plus souvent deux températures de seuil (dont la valeur peut varier selon le moment et des réglages personnels) : une première température de seuil qui est la température « minimale » et une deuxième température de seuil qui est la température « maximale » (le premier seuil est inférieur au deuxième seuil). Ces deux seuils sont quelques degrés autour (par exemple +/- 4°C) d'une température de « confort » qui est la température moyenne souhaitée, réglée par l'utilisateur (l'intervalle 50-65°C est courant).

Le module de contrôle 12 est ainsi configuré pour activer le dispositif de chauffage 11 lorsque le signal reçu est représentatif d'une température inférieure au premier seuil prédéfini, et/ou configuré pour désactiver le dispositif de chauffage 11 lorsque le signal reçu est représentatif d'une température supérieure au deuxième seuil prédéfini.

Ainsi, tant que le dispositif de chauffage 11 est arrêté et que l'on est entre les deux seuils rien ne se passe. Si la température baisse (avec le temps ou parce que l'utilisateur tire de l'eau chaude) et passe en dessous du premier seuil, le dispositif de chauffage 11 est activé, et ce jusqu'à atteindre le deuxième seuil (température maximale, supérieure au premier seuil), sous réserve que le dispositif de chauffage soit autorisé à fonctionner. La température se remet ensuite à baisser, etc. En d'autres termes il y a une alternance de phases de « refroidissement » pendant lesquelles la température descend du deuxième seuil au premier seuil (voir au-delà si l'utilisateur continue d'utiliser de l'eau chaude), et de phases de « chauffe » pendant lesquelles la température monte, sous l'effet du dispositif 11 allumé, d'une température inférieure ou égale au premier seuil jusqu'au deuxième seuil.

Ainsi, le soutirage d'eau chaude par l'équipement 40 permet le cas échéant de passer en-dessous du premier seuil, d'où une relance d'un cycle de chauffe de l'eau. Cela permet ainsi une anticipation de la consommation d'énergie : au lieu de consommer maintenant seulement l'énergie nécessaire au fonctionnement de l'équipement 40 et plusieurs heures après l'énergie d'une phase de chauffe de l'eau du réservoir 10, tout est fait au plus tôt, d'où un épongement du surplus d'énergie d'origine renouvelable.

Comme expliqué avant, cette configuration peut dépendre d'autres paramètres, et il peut y avoir plus de deux seuils, éventuellement mobiles, par exemple de façon à optimiser la consommation d'énergie pendant les heures creuses (les chauffe-eau sont souvent prévus pour remonter l'eau en température préférentiellement au petit matin, de sorte à maximiser l'utilisation des heures creuses et avoir de l'eau chaude en quantité au moment de se doucher). En particulier, le module de contrôle 12 peut même être capable de faire varier ces seuils en fonction desdites données descriptives d'un état dudit réseau électrique 2 de sorte à modifier la capacité énergétique du réservoir 10.

En pratique, les premier et deuxième seuils sont souvent la conséquence d'un phénomène d'hystérésis autour d'une valeur médiane, qui définit ces deux seuils. L'écart induit est alors d'environ 3°C.

De façon générale, il peut être prévu que l'alimentation en eau chaude de l'équipement 40 n'est en outre autorisée par l'élément de contrôle 30 que lorsque ledit signal est représentatif d'une température supérieure à un seuil prédéfini (en particulier le premier seuil), afin d'empêcher que la température baisse encore et que de l'inconfort puisse être créé chez l'utilisateur.

Dans un mode de réalisation particulièrement préféré (représenté par la figure 2) le système 1 comprend en outre un élément de leurre 21 (qui est typiquement soit intégré au chauffe-eau, soit confondu avec l'élément de contrôle 30) disposé entre la sonde 20 et le module de contrôle 12. Comme représenté sur la figure 3, l'élément de leurre 21 et l'élément de gestion 30 peuvent être distincts et reliés à un gestionnaire d'énergie commun 31.

Dans tous les cas, cet élément de leurre 21 est configuré pour modifier le signal émis par la sonde 20 de sorte à modifier une capacité énergétique du réservoir d'eau 10, en fonction de données descriptives d'un état dudit réseau électrique 2.

En d'autres termes, l'élément de leurre 21 fausse volontairement les mesures de température de la sonde 20, de sorte à duper le module de contrôle 12 et altérer la régulation de la température du réservoir 10. Le signal est en fait intercepté par l'élément de leurre 21, modifié et renvoyé au module de contrôle 12. Ce dernier le traite comme étant un signal authentique issu de la sonde 20.

Par exemple, pendant une phase de chauffe de l'eau (et donc de remontée en température du réservoir 10), l'élément de leurre peut modifier le signal envoyé par la sonde 20 de sorte à faire croire au module de contrôle 12 que l'eau est moins chaude qu'elle ne l'est réellement. Cela permet ainsi de dépasser le deuxième seuil de température.

Ce mécanisme se combine très avantageusement avec l'autorisation de l'alimentation en eau chaude: par exemple, partant d'un réservoir 10 plein à la température de consigne, l'équipement 40 en force le renouvellement d'une partie, dont la température peut être forcée à la baisse ou la hausse, en fonction de l'état du réseau 2.

Un mode « surchauffe » peut être utilisé pour augmenter la consommation du chauffe-eau et donc la quantité d'énergie stockée. Dans ce mode, l'élément de leurre 21 est configuré pour que le signal reçu par le module de contrôle 12 soit représentatif d'une température plus basse que la température réelle de l'eau du réservoir 10, lorsque les données descriptives d'un état dudit réseau électrique 2 sont caractéristiques d'une surabondance actuelle et/ou d'un déficit futur d'énergie d'origine renouvelable au sein dudit réseau électrique (en d'autres termes si la production d'origine renouvelable est à la baisse à court terme), de sorte à augmenter la capacité énergétique du réservoir d'eau 10 lorsque l'eau utilisée par l'équipement 40 va être renouvelée.

Ce mode surchauffe est intéressant soit pour éponger une forte production d'énergie d'origine renouvelable, soit une prévision de faible production. Grâce à la surchauffe, le deuxième seuil de température est franchi et de l'eau à 5, voire 15°C au-delà de la température de confort est stockée. La quantité d'électricité consommée est alors supérieure à la quantité que l'équipement 40 aurait dû consommer pour faire chauffer l'eau via le deuxième moyen de chauffe.

Il est à noter que ce mode surchauffe ou relance dynamique en général peut être complété de certaines options : augmenter temporairement et simultanément à l'enclenchement du chauffe-eau la valeur de la puissance de référence pour éviter tout risque de disjonction en absence de délesteur ou de gestionnaire d'énergie ou conditionner l'enclenchement du chauffe-eau à l'existence d'une marge suffisante entre la puissance appelée (i.e. la puissance actuellement consommée) et la puissance souscrite (i.e. la puissance de coupure du compteur). Cet écart doit être supérieur ou égal à la puissance nécessaire à la mise en marche de l'équipement 40, puissance incluant le cas échéant la puissance du dispositif de chauffage 11. En effet, la mise en marche de l'équipement 40 pourrait entraîner une disjonction si cet écart n'était pas respecté.

En outre, si les points de soutirage d'eau chaude sanitaire (douche, robinets, etc.) en aval ne sont pas tous équipés de mitigeur, l'ajout d'une vanne de mélange en sortie du réservoir 10 permet d'éviter les risques de brûlure dus à la fourniture d'eau plus chaude que la consigne par défaut et de respecter la température maximale d'alimentation en eau chaude des équipements déterminée par les constructeurs.

Un mode « sous-chauffe » peut être utilisé pour diminuer la consommation du chauffe-eau et donc la quantité d'énergie pré-stockée. Dans ce mode, l'élément de leurre 21 est configuré pour que le signal reçu par le module de contrôle 12 soit représentatif d'une température plus élevée que la température réelle de l'eau du réservoir 10, lorsque les données descriptives d'un état dudit réseau électrique 2 sont caractéristiques d'un déficit actuel et/ou d'une surabondance future d'énergie d'origine renouvelable au sein dudit réseau électrique 2 (en d'autres termes si la production d'origine renouvelable est à la hausse à court terme), de sorte à diminuer la capacité énergétique du réservoir d'eau 10 pour créer un gisement de consommation futur.

Au contraire du mode surchauffe, ce mode fait croire au module de contrôle 12 que le réservoir 10 contient de l'eau encore chaude de sorte à retarder la consommation électrique du dispositif 11 de chauffage du réservoir.

Il est à noter que les deux modes peuvent cohabiter et être mis en œuvre à tour de rôle. Si le module de contrôle 12 est une carte électronique évoluée permettant soit d'adapter la température de consigne en fonction des contraintes du système électrique ou de la recevoir sous forme de valeur ou d'allure (typiquement d'un gestionnaire d'énergie), l'élément de leurre 21 peut être directement inclus dans le module de contrôle 12 (en tant qu'élément logiciel), comme c'est par exemple le cas dans la figure 3.

### Mise en marche automatique

Si l'équipement 40 n'est pas fonctionnel, l'alimentation en eau chaude n'a pas d'impact sur la consommation immédiate potentielle mais peut permettre de régénérer la capacité de stockage du lendemain si l'équipement est déclenché manuellement par l'utilisateur dans la soirée. Lorsque la capacité maximale de stockage du réservoir est atteinte, il faut que l'eau chaude soit effectivement consommée pour pouvoir stocker davantage. Ainsi, il est intéressant que l'autorisation d'alimentation soit assortie d'une mise en marche effective de l'équipement 40.

Ce peut être dévolu à l'utilisateur (en l'avertissant par exemple des moments propices où lancer une machine), mais avantageusement cela est automatisé. Pour cela l'élément de contrôle 30 est avantageusement également configuré pour déclencher une mise en marche de l'équipement 40 si :
- l'alimentation en eau chaude est autorisée par l'élément de contrôle 30, et
- l'équipement 40 est dans un état d'attente.

En d'autres termes, l'utilisateur « charge » son équipement 40, qui est prêt à être lancé (par exemple il part au travail avec son lave-vaisselle rempli de vaisselle et avec une pastille insérée, mis dans un mode « standby », qui correspond à l'état d'attente). Dès que les conditions d'alimentation en eau chaude de l'équipement 40 sont respectées, la mise en marche est alors automatique.

Cette mise en marche peut toutefois être conditionnée à une ou plusieurs plages temporelles renseignées par un utilisateur. Ces dernières peuvent être des plages d'heures creuses (pour un gain financier), ou des plages préférées par un utilisateur (par exemple ses heures d'absence, pendant lesquelles il souhaite par exemple que son linge soit lavé).

Il peut en outre être requis que l'écart entre la puissance appelée et la puissance souscrite soit suffisamment élevé (par exemple au moins 20% de la puissance souscrite) afin d'éviter tout risque de disjonction.

L'élément de contrôle 30 peut même être également configuré pour déclencher une mise en marche de l'équipement 40 même si l'alimentation en eau chaude n'est pas autorisée, si :
- l'équipement 40 est chargé et dans un état d'attente, et
- le temps restant avant la fin de la prochaine plage temporelle est inférieur à la durée d'un cycle de l'équipement 40.

Ainsi, s'il a préparé l'équipement 40 mais que les conditions d'alimentation en eau chaude ne se sont pas présentées (par exemple si l'énergie d'origine renouvelable a été en déficit toute la journée), l'équipement 40 est quand même lancé (sur alimentation eau froide), de sorte à ce que l'usage demandé par l'utilisateur (lavage du linge, etc.) soit quand même accompli. Cette marche forcée doit néanmoins présenter un intérêt pour l'utilisateur en termes de confort puisqu'elle ne procure pas d'économies. Par exemple, il peut s'agir de faire fonctionner un équipement bruyant pendant une période d'absence.

### Deuxième mode de fonctionnement

Comme on l'a vu, l'alimentation en eau de l'équipement 40 est subordonnée au maintien d'une quantité d'eau chaude disponible minimale (pour les usages courants) dans le réservoir.

Une possibilité est de tirer profit d'un réservoir 10 sensiblement surdimensionné par rapport à ladite quantité minimale de référence (par exemple, ce peut être par exemple le cas d'un couple vivant en maison individuelle équipée d'un chauffe-eau de 200l ou plus), l'élément de contrôle 30 étant en outre configuré pour ne pas autoriser l'alimentation du dispositif de chauffage 11 lorsque les données descriptives d'un état dudit réseau électrique 2 sont caractéristiques d'un déficit actuel et/ou d'une surabondance future d'énergie d'origine renouvelable au sein dudit réseau électrique 2, si la quantité d'eau chaude disponible dans le réservoir 10 est supérieure à ladite quantité minimale de référence.

En d'autres termes, dans ce deuxième mode de fonctionnement on utilise la surcapacité du réservoir pour consommer le moins d'électricité possible en heures pleines. Soutirer de l'eau chaude revient ici en effet à consommer l'électricité en différé en heures creuses.

Empêcher l'alimentation du dispositif 11 prévient que le chauffe-eau relance un cycle de chauffe et consomme de l'électricité tout de suite. Une façon simple de mettre en œuvre ce mode de fonctionnement est l'utilisation de l'élément de leurre 21 décrit avant, en mode « sous-chauffe » : en faisant croire au module de contrôle que le réservoir 10 est encore rempli d'eau chaude, le dispositif 11 reste éteint ou plus simplement d'asservir le chauffe-eau à un ou plusieurs index fournisseur et/ou contact(s) sec ou virtuel(s).

Par ailleurs l'utilisateur peut choisir que l'alimentation en eau chaude de l'équipement 40 est également autorisée par l'élément de contrôle 30 dès lors que la quantité d'eau chaude dans le réservoir 10 est supérieure à la somme d'une quantité minimale de référence et de ladite quantité prédéterminée associée à un cycle (quelque soit l'état du réseau électrique 2). S'il n'y a pas de déficit d'énergie d'origine renouvelable (et donc pas de besoin de limiter la consommation), le dispositif 11 ne sera pas bloqué. Le bilan énergétique est nul (ce qui n'est pas consommé par le deuxième moyen l'est par le premier), mais cela permet comme expliqué un meilleur lissage de la consommation et prévient des pics et des variations rapides de la charge du réseau qui peuvent être nocifs.

### Fonctionnement de l'élément de contrôle

L'élément de contrôle 30 peut comprendre un module de traitement de données (un processeur) configuré pour générer à destination de l'équipement 40 et/ou d'actionneurs de vannes un signal de contrôle en fonction desdites données descriptives d'un état dudit réseau électrique 2.

Soit les consignes peuvent être directement interprétées par les appareils (il est même possible que l'élément 30 soit complètement intégré dans l'équipement 40, comme c'est le cas dans le mode de réalisation de la figure 3) ; soit il est possible de piloter des entrées au niveau de ces appareils via un actionneur (comme des contacts secs), comme c'est par exemple le cas dans la figure 2.

Par exemple, une configuration à deux contacts peut être la suivante :

| | **Contact n°1 ouvert** | **Contact n°1 fermé** |
|---|---|---|
| **Contact n°2 ouvert** | alimentation en eau froide uniquement | alimentation en eau chaude |
| **Contact n°2 fermé** | alimentation en eau froide uniquement et autorisation de marche | alimentation en eau chaude et autorisation de marche |

Alternativement, l'élément de contrôle 30 peut être un module logiciel directement mis en œuvre par l'équipement 40. L'invention n'est en effet pas limitée à un élément de contrôle 30 physique.

En outre, comme expliqué l'élément de contrôle 30 peut être associé à un élément de leurre 21 (qui est avantageusement intégré à l'élément de contrôle 30, et fonctionne sur les mêmes moyens de traitement de données) configuré pour recevoir le signal émis par la sonde 20 et générer à destination du module de contrôle 12 un signal représentatif d'une température différente de la température réelle de l'eau du réservoir 10 en fonction desdites données descriptives d'un état dudit réseau électrique 2.

Si les éléments 30 et 21 sont séparés, et si le module de contrôle 12 est une carte électronique évoluée comprenant déjà un processeur, l'élément de leurre 21 peut être un module logiciel directement mis en œuvre par le module de contrôle 12. L'invention n'est en effet pas limitée à un élément de leurre 21 physique.

Mais alternativement, d'autres architectures simples et moins chères qu'un processeur sont possibles, en particulier si la sonde 20 comprend une thermistance.

Pour une telle sonde 20, l'élément de leurre 21 peut être un organe électrique permettant sur commande de modifier la tension mesurée aux bornes de la thermistance.

Pour augmenter la consigne de température (mode surchauffe, flèche vers la gauche sur le diagramme de la figure 2), il suffit de leurrer à la hausse la résistance de la thermistance grâce à l'ajout d'une résistance en série. La résistance équivalente sera donc supérieure à la résistance réelle, faisant ainsi croire au régulateur que la température d'eau est plus faible qu'en réalité.

Au contraire pour diminuer la consigne (mode sous-chauffe, flèche vers la droite sur le diagramme de la figure 2), une résistance supplémentaire doit être placée en parallèle. La résistance équivalente (l'inverse de la somme des inverse des résistances) sera alors inférieure à la résistance réelle, faisant croire au régulateur que la température est plus élevée qu'elle ne l'est réellement.

Ainsi, l'élément de leurre 21 comprend par exemple au moins une résistance (en série ou parallèle des bornes de la sonde 20) et au moins un interrupteur.

### Exemples de scénarios

De façon générale, le système 1 selon l'invention est complètement modulable, et l'utilisateur peut définir un ou plusieurs scénario(s) qui combine(nt) une ou plusieurs conditions d'autorisation d'alimentation en eau chaude et une ou plusieurs conditions d'autorisation de marche, et priorise(nt) le ou les équipements 40 consommateurs d'eau chaude entre eux. Voici deux exemples de scénarios :
« Je souhaite valoriser au maximum l'Eau Chaude Sanitaire accumulée en Heures Creuses mais je veux garder la main sur l'enclenchement de mes équipements »
   - Dès que la quantité d'énergie stockée dans le réservoir 10 lors des relances pilotées est supérieure ou égale à la quantité d'énergie nécessaire pour alimenter un ou plusieurs équipements 40, l'élément de contrôle 30 autorise l'alimentation en eau chaude d'un ou plusieurs équipements 40.
   - La marche pilotée n'est pas autorisée donc je n'ai pas à anticiper le chargement des appareils.
« Je souhaite maximiser l'autoconsommation des énergies d'origine renouvelable locale, je préfère que mon linge soit propre lorsque que je rentre du travail et que mon lave-vaisselle fonctionne en Heures Creuses »
   - Je programme l'autorisation d'enclenchement du Lave-Linge entre 17h et 18h les jours ouvrés et l'autorisation d'enclenchement du Lave-Vaisselle en index Heures Creuses.
   - Je charge mon lave-linge le matin avant de quitter mon domicile, choisis le cycle de lavage et l'option départ différé.
   - Dès que la quantité d'énergie stockée lors des relances pilotées dans le réservoir 10 est supérieure ou égale à la quantité d'énergie nécessaire pour alimenter un ou plusieurs équipement(s), l'équipement de contrôle 30 autorise l'alimentation en eau chaude d'un ou plusieurs équipements 40 selon la hiérarchie que j'ai établi.
   - Sous réserve que la quantité d'énergie stockée lors des relances pilotées le permette, le Lave-Linge est autorisé à démarrer au premier des 2 événements suivants qui apparaît : « la capacité de stockage maximale d'eau chaude dans le réservoir 10 est atteinte (i.e. le ballon est plein) » ou « il est 17h ».
   - Sous réserve que la quantité d'énergie stockée lors des relances pilotées le permette, le Lave-Vaisselle est autorisé à démarrer au début des Heures Creuses. Ceci est sans effet, si je n'ai pas préalablement chargé le Lave-Vaisselle, choisi le cycle de lavage et l'option départ différé au cours de la soirée.

### Modification d'un système existant

Selon un deuxième aspect, l'invention concerne un élément de contrôle 30 adapté pour un système existant.

Comme expliqué, l'élément de contrôle peut s'intégrer par exemple sur le réseau d'eau 4 existant sans modifications substantielles. En particulier, il n'est pas obligatoire de modifier l'équipement 40, qui peut être tout à fait capable de gérer une alimentation en un mélange d'eau chaude et d'eau froide de température variable.

L'élément de contrôle 30 est configuré pour autoriser ou non l'alimentation de l'équipement 40 en eau chaude depuis le réservoir 10 en fonction de données descriptives d'un état dudit réseau électrique 2.

### Procédé

Selon un troisième aspect, l'invention concerne également un procédé d'utilisation d'un équipement 40 consommateur d'eau chaude, le procédé étant caractérisé en ce qu'il comprend des étapes de :
- réception de données descriptives d'un état d'un réseau électrique 2 (par exemple depuis un réseau de communication 3) ;
- traitement desdites données descriptives d'un état d'un réseau électrique 2 par un élément de contrôle 30 de sorte à autoriser l'alimentation de l'équipement 40 en eau chaude issue d'un réservoir 10 d'eau chaude et/ou en eau froide (voir les conditions évoquées précédemment) ;
- si l'alimentation en eau chaude n'est pas autorisée, chauffage de l'eau froide par un moyen de chauffage de l'équipement 40 ;
- mise en marche de l'équipement 40.

La mise en marche peut également être contrôlée par l'élément de contrôle 30. Ainsi l'étape de procédé de mise en marche de l'équipement est déclenchée par l'élément de contrôle 30, lorsque l'alimentation en eau chaude est autorisée par l'élément de contrôle 30, et l'équipement 40 est chargé et dans un état d'attente.

## Revendications

1. Système (1) comprenant :
- Un chauffe-eau comprenant un réservoir d'eau (10) et un dispositif de chauffage (11) de l'eau du réservoir (10), le dispositif (11) comprenant un premier moyen de chauffage alimenté par un réseau électrique (2) ;
- un équipement domestique (40) consommateur d'eau chaude, distinct dudit chauffe-eau, l'équipement (40) pouvant être alimenté à la fois en eau froide et/ou en eau chaude, et comprenant un deuxième moyen de chauffage alimenté par le réseau électrique (2) ;
le système comprenant en outre un élément de contrôle (30) configuré pour autoriser ou non l'alimentation de l'équipement (40) en eau chaude depuis le réservoir (10) en fonction d'au moins des données descriptives d'un état dudit réseau électrique (2).

2. Système selon la revendication 1, comprenant en outre un boitier (31) recevant lesdites données descriptives d'un état du réseau électrique (2) depuis un réseau de communication (3), le boitier (31) étant connecté à l'élément de contrôle (30).

3. Système selon l'une des revendications précédentes, dans lequel le chauffe-eau comprend au moins une sonde (20), la sonde (20) étant soit une sonde de température configurée pour émettre un signal représentatif de la température de l'eau du réservoir (10), soit une sonde de comptage configurée pour émettre un signal représentatif de la quantité d'énergie thermique ou de la variation de la quantité d'énergie dans le réservoir (10), l'alimentation en eau chaude de l'équipement (40) n'étant en outre autorisée par l'élément de contrôle (30) que lorsque ledit signal est représentatif d'une température supérieure à un seuil prédéfini ou d'une quantité d'énergie thermique supérieure à un seuil prédéfini.

4. Système selon la revendication 3, dans lequel le chauffe-eau comprend un module de contrôle (12) dudit dispositif de chauffage (11) contrôlé en fonction dudit signal émis par la sonde (20), et un élément de leurre (21) disposé entre la sonde (20) et le module de contrôle (12) configuré pour modifier le signal émis par la sonde (20) de sorte à modifier une capacité énergétique du réservoir d'eau (10), en fonction des données descriptives d'un état dudit réseau électrique (2).

5. Système selon l'une des revendications précédentes, dans lequel l'équipement (40) présente un fonctionnement par cycles, un cycle étant associé à une consommation d'au moins une quantité prédéterminée d'eau chaude.

6. Système selon la revendication 5, dans lequel l'alimentation en eau chaude de l'équipement (40) est autorisée par l'élément de contrôle (30) lorsque :
- les données descriptives d'un état dudit réseau électrique (2) sont caractéristiques d'une surabondance actuelle et/ou d'un déficit futur d'énergie d'origine renouvelable au sein dudit réseau électrique (2), et
- la quantité d'eau chaude dans le réservoir (10) est supérieure à la somme d'une quantité minimale de référence et de ladite quantité prédéterminée associée à un cycle et/ou la capacité énergétique maximale du réservoir (10) est atteinte.

7. Système selon la revendication 6, dans lequel ladite quantité minimale de référence est calculée par l'élément de contrôle (30) en fonction d'usages moyens renseignés par un utilisateur ou déterminés par auto-apprentissage.

8. Système selon l'une des revendications 6 et 7, dans lequel le réservoir (10) est sensiblement surdimensionné par rapport à ladite quantité minimale de référence, l'élément de contrôle (30) étant en outre configuré pour ne pas autoriser l'alimentation du dispositif de chauffage (11) lorsque les données descriptives d'un état dudit réseau électrique (2) sont caractéristiques d'un déficit actuel et/ou d'une surabondance future d'énergie d'origine renouvelable au sein dudit réseau électrique (2), si la quantité d'eau chaude disponible dans le réservoir (10) est supérieure à ladite quantité minimale de référence.

9. Système selon l'une des revendications précédentes, dans lequel l'utilisateur peut choisir que l'alimentation en eau chaude de l'équipement (40) est également autorisée par l'élément de contrôle (30) dès lors que la quantité d'eau chaude dans le réservoir (10) est supérieure à la somme d'une quantité minimale de référence et de ladite quantité prédéterminée associée à un cycle.

10. Système selon l'une des revendications précédentes, dans lequel l'élément de contrôle (30) est également configuré pour déclencher une mise en marche de l'équipement (40) si :
- l'alimentation en eau chaude est autorisée par l'élément de contrôle (30), et
- l'équipement (40) est dans un état d'attente.

11. Système selon la revendication 10, dans lequel l'élément de contrôle (30) est également configuré pour ne déclencher une mise en marche de l'équipement (40) que si l'écart entre une puissance appelée et une puissance souscrite est supérieur à un seuil prédéterminé.

12. Système selon l'une des revendications 10 et 11, dans lequel l'élément de contrôle (30) est également configuré pour ne déclencher une mise en marche de l'équipement (40) que dans une ou plusieurs plages temporelles renseignées par un utilisateur.

13. Système selon l'une des revendications 1 à 5, dans lequel l'élément de contrôle (30) est également configuré pour déclencher une mise en marche de l'équipement (40) même si l'alimentation en eau chaude n'est pas autorisée, si :
- l'équipement (40) est chargé et dans un état d'attente, et
- le temps restant avant la fin de la prochaine plage temporelle est inférieur à la durée d'un cycle de l'équipement (40).

14. Système selon l'une des revendications précédentes, dans lequel l'élément de contrôle (30) est adapté pour contrôler au moins un actionneur d'une vanne disposée sur une branche d'eau chaude (4b) et/ou une branche d'eau froide (4a), pour l'alimentation en eau chaude de l'équipement (40).

15. Système selon l'une des revendications précédentes, dans lequel l'équipement (40) est un lave-linge ou un lave-vaisselle.

16. Elément de contrôle (30) adapté pour un système comprenant :
- Un chauffe-eau comprenant un réservoir d'eau (10) et un dispositif de chauffage (11) de l'eau du réservoir (10), le dispositif (11) comprenant un premier moyen de chauffage alimenté par un réseau électrique (2) ;
- un équipement domestique (40) consommateur d'eau chaude, distinct dudit chauffe-eau, l'équipement (40) pouvant être alimenté à la fois en eau froide et en eau chaude, et comprenant un deuxième moyen de chauffage alimenté par le réseau électrique (2) ;
l'élément de contrôle (30) étant configuré pour autoriser ou non l'alimentation de l'équipement (40) en eau chaude depuis le réservoir (10) en fonction d'au moins des données descriptives d'un état dudit réseau électrique (2).

17. Procédé d'utilisation d'un équipement (40) consommateur d'eau chaude, le procédé comprenant des étapes de :
- réception de données descriptives d'un état d'un réseau électrique (2) ;
- traitement desdites données descriptives d'un état d'un réseau électrique (2) par un élément de contrôle (30) de sorte à autoriser l'alimentation de l'équipement (40) en eau chaude issue d'un réservoir (10) d'eau chaude d'un chauffe-eau distinct dudit équipement (40) et/ou en eau froide ;
- si l'alimentation en eau chaude n'est pas autorisée, chauffage de l'eau froide par un moyen de chauffage de l'équipement (40) ;
- mise en marche de l'équipement (40).

18. Procédé selon la revendication 17, dans lequel l'étape de mise en marche de l'équipement est déclenchée par l'élément de contrôle (30), lorsque l'alimentation en eau chaude est autorisée par l'élément de contrôle (30), et l'équipement (40) est chargé et dans un état d'attente.

## Patentansprüche

1. System (1), umfassend:
- Einen Warmwasserbereiter, der einen Wasserbehälter (10) und eine Heizvorrichtung (11) des Wassers des Behälters (10) umfasst, wobei die Vorrichtung (11) ein erstes Heizmittel umfasst, das durch ein Stromnetz (2) versorgt wird;
- ein Haushaltsgerät (40), das Warmwasser verbraucht, von dem Warmwasserbereiter getrennt, wobei das Gerät (40) gleichzeitig mit kaltem Wasser und/oder mit warmem Wasser versorgt werden kann, und ein zweites Heizmittel umfasst, das durch das Stromnetz (2) versorgt wird;
wobei das System weiter ein Kontrollelement (30) umfasst, das konfiguriert ist, um die Versorgung des Gerätes (40) mit warmem Wasser aus dem Behälter (10) in Abhängigkeit von mindestens einen Zustand des Stromnetzes (2) beschreibenden Daten zuzulassen oder nicht.

2. System nach Anspruch 1, weiter ein Gehäuse (31) umfassend, das die einen Zustand des Stromnetzes (2) beschreibenden Daten aus einem Kommunikationsnetzwerk (3) empfängt, wobei das Gehäuse (31) mit dem Kontrollelement (30) verbunden ist.

3. System nach einem der vorstehenden Ansprüche, wobei der Warmwasserbereiter mindestens eine Sonde (20) umfasst, wobei die Sonde (20) entweder eine Temperatursonde ist, die konfiguriert ist, um ein Signal auszugeben, das repräsentativ für die Temperatur des Wassers des Behälters (10) ist, oder eine Zählsonde, die konfiguriert ist, um ein Signal auszugeben, das repräsentativ für die Menge an Wärmeenergie oder die Variation der Energiemenge in dem Behälter (10) ist, wobei die Warmwasserversorgung des Gerätes (40) darüber hinaus durch das Kontrollelement (30) nur dann zugelassen wird, wenn das Signal für eine Temperatur über einem vordefinierten Schwellenwert oder eine Menge an Wärmeenergie über einem vordefinierten Schwellenwert repräsentativ ist.

4. System nach Anspruch 3, wobei der Warmwasserbereiter ein Kontrollmodul (12) der Heizvorrichtung (11) umfasst, das in Abhängigkeit von dem durch die Sonde (20) ausgegebenen Signal kontrolliert wird, und ein Ablenkungselement (21), das zwischen der Sonde (20) und dem Kontrollmodul (12) angeordnet ist, das konfiguriert ist, um das von der Sonde (20) ausgegebene Signal derart zu ändern, um eine Energiekapazität des Wasserbehälters (10) in Abhängigkeit von den einen Zustand des Stromnetzes (2) beschreibenden Daten zu modifizieren.

5. System nach einem der vorstehenden Ansprüche, wobei das Gerät (40) einen zyklischen Betrieb aufweist, wobei ein Zyklus einem Verbrauch von mindestens einer vorbestimmten Warmwassermenge zugewiesen wird.

6. System nach Anspruch 5, wobei die Warmwasserversorgung des Gerätes (40) durch das Kontrollelement (30) zugelassen wird, wenn:
- die einen Zustand des Stromnetzes (2) beschreibenden Daten charakteristisch für ein aktuelles Überangebot und/oder ein künftiges Defizit an erneuerbarer Energie innerhalb des Stromnetzes (2) sind, und
- die Warmwassermenge in dem Behälter (10) größer als die Summe einer Mindestbezugsmenge und der vorbestimmten Menge ist, die einem Zyklus und/oder der maximalen Energiekapazität des Behälters (10) zugewiesen ist, erreicht wird.

7. System nach Anspruch 6, wobei die Mindestbezugsmenge durch das Kontrollelement (30) in Abhängigkeit von mittleren Verwendungen berechnet wird, die von dem Benutzer eingegeben werden, oder durch Selbstlernen bestimmt werden.

8. System nach einem der Ansprüche 6 und 7, wobei der Behälter (10) im Wesentlichen in Bezug auf die Mindestbezugsmenge überbemessen ist, wobei das Kontrollelement (30) weiter konfiguriert ist, um die Versorgung der Heizvorrichtung (11) nicht zuzulassen, wenn die einen Zustand des Stromnetzes (2) beschreibenden Daten charakteristisch für ein aktuelles Defizit und/oder ein künftiges Überangebot an erneuerbarer Energie innerhalb des Stromnetzes (2) ist, falls die in dem Behälter (10) verfügbare Warmwassermenge über der Mindestbezugsmenge liegt.

9. System nach einem der vorstehenden Ansprüche, wobei der Nutzer wählen kann, dass die Warmwasserversorgung des Gerätes (40) auch dann von dem Kontrollelement (30) zugelassen wird, sobald die Warmwassermenge in dem Behälter (10) über der Summe einer Mindestbezugsmenge und der vorbestimmten Menge liegt, die einem Zyklus zugewiesen ist.

10. System nach einem der vorstehenden Ansprüche, wobei das Kontrollelement (30) auch konfiguriert ist, um eine Inbetriebnahme des Gerätes (40) auszulösen, falls:
- die Warmwasserversorgung durch das Kontrollelement (30) zugelassen wird, und
- das Gerät (40) in einem Wartezustand ist.

11. System nach Anspruch 10, wobei das Kontrollelement (30) auch konfiguriert ist, um eine Inbetriebnahme des Gerätes (40) nur dann auszulösen, falls die Abweichung zwischen einer aufgerufenen Leistung und einer abonnierten Leistung größer als ein vorbestimmter Schwellenwert ist.

12. System nach einem der Ansprüche 10 und 11, wobei das Kontrollelement (30) auch konfiguriert ist, um eine Inbetriebnahme des Gerätes (40) nur dann in einem oder mehreren Zeitbereichen auszulösen, die durch einen Nutzer eingegeben werden.

13. System nach einem der Ansprüche 1 bis 5, wobei das Kontrollelement (30) auch konfiguriert ist, um eine Inbetriebnahme des Gerätes (40) selbst dann auszulösen, wenn die Warmwasserversorgung nicht zugelassen ist, falls:
- das Gerät (40) geladen und in einem Wartezustand ist, und
- die verbleibende Zeit vor dem Ende des nächsten Zeitbereichs geringer als die Dauer eines Zyklus des Gerätes (40) ist.

14. System nach einem der vorstehenden Ansprüche, wobei das Kontrollelement (30) angepasst ist, um mindestens einen Aktor eines Ventils zu kontrollieren, das an einer Warmwasserverzweigung (4b) und/oder einer Kaltwasserverzweigung (4a) zur Warmwasserversorgung des Gerätes (40) angeordnet ist.

15. System nach einem der vorstehenden Ansprüche, wobei das Gerät (40) eine Waschmaschine oder Geschirrspülmaschine ist.

16. Kontrollelement (30), das für ein System angepasst ist, das Folgendes umfasst:
- Einen Warmwasserbereiter, der einen Wasserbehälter (10) und eine Heizvorrichtung (11) des Wassers des Behälters (10) umfasst, wobei die Vorrichtung (11) ein erstes Heizmittel umfasst, das durch ein Stromnetz (2) versorgt wird;
- ein Haushaltsgerät (40), das Warmwasser verbraucht, das von dem Warmwasserbereiter getrennt ist, wobei das Gerät (40) gleichzeitig mit kaltem Wasser und/oder mit warmem Wasser versorgt werden kann, und ein zweites Heizmittel umfasst, das durch das Stromnetz (2) versorgt wird;
wobei das Kontrollelement (30) konfiguriert ist, um die Versorgung des Gerätes (40) mit warmem Wasser aus dem Behälter (10) in Abhängigkeit von mindestens einen Zustand des Stromnetzes (2) beschreibenden Daten zuzulassen oder nicht.

17. Verfahren zur Verwendung eines Gerätes (40), das Warmwasser verbraucht, die folgenden Schritte umfassend:
- Empfangen von einem Zustand eines Stromnetzes (2) beschreibenden Daten;
- Bearbeiten der einen Zustand eines Stromnetzes (2) beschreibenden Daten durch ein Kontrollelement (30), derart, um die Versorgung des Gerätes (40) mit Warmwasser aus einem Warmwasserbehälter (10) eines von dem Gerät (40) getrennten Warmwasserbereiters und/oder mit Kaltwasser zuzulassen;
- falls die Warmwasserversorgung nicht zugelassen ist, Aufheizen des Kaltwassers durch ein Heizmittel des Gerätes (40);
- Inbetriebnehmen des Gerätes (40).

18. Verfahren nach Anspruch 17, wobei der Schritt des Inbetriebnehmens des Gerätes durch das Kontrollelement (30) ausgelöst wird, wenn die Warmwasserversorgung durch das Kontrollelement (30) zugelassen ist, und das Gerät (40) geladen und in einem Wartezustand ist.

## Claims

1. A system (1) comprising:
- a water heater comprising a water tank (10) and a device (11) for heating the water in the tank (10), the device (11) comprising first heating means powered by a power grid (2);
- hot water consuming home equipment (40), distinct from said water heater, the equipment (40) being able to be supplied with both cold water and/or hot water, and comprising second heating means powered by the power grid (2); the system further comprising a control element (30) configured to enable or disable the hot water supply to the equipment (40) from the tank (10) depending on at least data descriptive of a state of said power grid (2).

2. The system according to claim 1, further comprising a box (31) receiving said data descriptive of a state of the power grid (2) from a communication network (3), the box (31) being connected to the control element (30).

3. The system according to one of the preceding claims, wherein the water heater comprises at least one probe (20), the probe (20) being either a temperature probe configured to emit a signal representative of the temperature of the water in the tank (10), or a metering probe configured to emit a signal representative of the amount of thermal energy or of the variation of the amount of energy in the tank (10), the hot water supply to the equipment (40) being further enabled by the control element (30) only when said signal is representative of a temperature greater than a predefined threshold or of an amount of thermal energy greater than a predefined threshold.

4. The system according to claim 3, wherein the water heater comprises a control module (12) of said heating device (11) controlled depending on said signal emitted by the probe (20), and a decoy element (21) disposed between the probe (20) and the control module (12) configured to change the signal emitted by the probe (20) so as to change an energy capacity of the water tank (10), depending on the data descriptive of a state of said power grid (2).

5. The system according to one of the preceding claims, wherein the equipment (40) has a cycle operation, one cycle being associated with the consumption of at least one predetermined amount of hot water.

6. The system according to claim 5, wherein the hot water supply to the equipment (40) is enabled by the control element (30) when:
- the data descriptive of a state of said power grid (2) are characteristic of a current overabundance and/or a future deficit of energy of renewable origin within said power grid (2), and
- the quantity of hot water in the tank (10) is greater than the sum of a minimum reference amount and said predetermined amount associated with a cycle and/or the maximum energy capacity of the tank (10) is reached.

7. The system according to claim 6, wherein said minimum reference amount is calculated by the control element (30) depending on average uses indicated by a user or determined by self-learning.

8. The system according to one of claims 6 and 7, wherein the tank (10) is substantially oversized relative to said minimum reference amount, the control element (30) being further configured not to enable the power of the heating device (11) when the data descriptive of a state of said power grid (2) are characteristic of a current deficit and/or of a future overabundance of energy of renewable origin within said power grid (2), if the quantity of hot water available in the tank (10) is greater than said minimum reference amount.

9. The system according to one of the preceding claims, wherein the user can choose that the hot water supply to the equipment (40) is also enabled by the control element (30) as soon as the amount of hot water in the tank (10) is greater than the sum of a minimum reference amount and said predetermined amount associated with a cycle.

10. The system according to one of the preceding claims, wherein the control element (30) is also configured to trigger a start-up of the equipment (40) if:
- the hot water supply is enabled by the control element (30), and
- the equipment (40) is in a standby state.

11. The system according to claim 10, wherein the control element (30) is also configured to trigger a start-up of the equipment (40) only if the difference between a demanded power and a contract power is greater than a predetermined threshold.

12. The system according to one of claims 10 and 11, wherein the control element (30) is also configured to trigger a start-up of the equipment (40) only in one or more time range(s) indicated by a user.

13. The system according to one of claims 1 to 5, wherein the control element (30) is also configured to trigger a start-up of the equipment (40) even if the hot water supply is not enabled, if:
- the equipment (40) is loaded and in a standby state, and
- the time remaining before the end of the next time range is less than the duration of one cycle of the equipment (40).

14. The system according to one of the preceding claims, wherein the control element (30) is adapted to control at least one actuator of a valve disposed on a hot water branch (4b) and/or a cold water branch (4a), for supplying hot water to the equipment (40).

15. The system according to one of the preceding claims, wherein the equipment (40) is a washing machine or a dishwasher.

16. A control element (30) adapted for a system comprising:
- a water heater comprising a water tank (10) and a device (11) for heating the water in the tank (10), the device (11) comprising first heating means powered by a power grid (2);
- hot water consuming home equipment (40), distinct from said water heater, the equipment (40) being able to be supplied with both cold water and/or hot water, and comprising second heating means powered by the power grid (2);
the control element (30) being configured to enable or disable the hot water supply to the equipment (40) from the tank (10) depending on at least data descriptive of a state of said power grid (2).

17. A method for using hot water consuming equipment (40), the method comprising steps of:
- receiving data descriptive of a state of a power grid (2);
- processing said data descriptive of a state of a power grid (2) by a control element (30) so as to enable supplying the equipment (40) with hot water from a hot water tank (10) of a water heater distinct from said equipment (40) and/or with cold water;
- if the hot water supply is not enabled, heating the cold water by means for heating the equipment (40);
- starting-up the equipment (40).

18. The method according to claim 17, wherein the step of starting-up the equipment is triggered by the control element (30), when the hot water supply is enabled by the control element (30), and the equipment (40) is loaded and in a standby state.
